# EUROPÄISCHE PATENTSCHRIFT

(11) **EP 1 730 015 B1**
(45) Veröffentlichungstag und Bekanntmachung des Hinweises auf die Patenterteilung: **11.12.2013**
(21) Anmeldenummer: 05715046.8
(22) Anmeldetag: 03.03.2005
(51) Int. Cl.: B62D 21/15, B62D 25/04

(54) **KRAFTFAHRZEUG MIT SEITENAUFPRALLVERSTÄRKUNG**
MOTOR VEHICLE COMPRISING SIDE-IMPACT REINFORCEMENT
VEHICULE COMPORTANT UN RENFORT CONTRE LES IMPACTS LATERAUX

(30) Priorität: 24.03.2004 DE 102004014796
(43) Veröffentlichungstag der Anmeldung: 13.12.2006
(73) Patentinhaber: Wilhelm Karmann GmbH, 49084 Osnabrück (DE)
(72) Erfinder: KOORMANN, Markus, 49082 Osnabrück (DE); EXNER, Markus, 49191 Belm (DE); HESSEL, Thomas, 48155 Münster (DE)
(74) Vertreter: Kronthaler, Schmidt & Coll.
(86) Internationale Anmeldenummer: PCT/DE2005/000355
(87) Internationale Veröffentlichungsnummer: WO 2005/095184

(56) Entgegenhaltungen:
- DE-A1- 19 811 215
- US-A- 4 934 751

## Beschreibung

Die Erfindung betrifft ein Kraftfahrzeug, insbesondere Coupé- oder Cabriolet-Fahrzeug, mit einer B-Säule, einer Längsschwelleranordnung, in die die B-Säule mündet, und einer Querversteifung, die sich in Querrichtung bis oberhalb der Längsschwelleranordnung und benachbart zu einem unteren Ende der B-Säule erstreckt.

Ein derartiges Kraftfahrzeug ist beispielsweise aus dem deutschen Gebrauchsmuster DE 297 14 656 bekannt. Dort sind im wesentlichen vertikal ausgerichtete Verstärkungsprofile zur Aufnahme von seitlich auf das Fahrzeug einwirkenden Aufprallkräften zugeordnet.

Bei Personenkraftwagen in Form von Cabriolets oder Coupés besteht allgemein das Problem, daß die B-Säule auf beiden Seiten der Karosserie im Bereich der Brüstungslinie und damit unterhalb der seitlichen Fensterbereiche endet. Nach unten münden die B-Säulen jeweils in eine Längsschwelleranordnung, die ebenfalls Teil der tragenden Struktur der Karosserie sind. Da die B-Säulen in ihrem oberen Endbereich keine Anbindung an einem Dachrahmen der Karosseriestruktur aufweisen, sind sie im Hinblick auf seitliche Aufprallbelastungen relativ schwach ausgelegt, so daß bei einem Seitenaufprall das obere, freie Ende der B-Säule in den Fahrzeuginnenraum gedrückt werden kann und eine erhebliche Verletzungsgefahr für den Fahrer bzw. Beifahrer besteht.

Die bekannten Verstärkungsrohre sind insoweit noch verbesserungsbedürftig, da sie einen relativ kleinen Querschnitt aufweisen und dadurch bei einem Seitenaufprall relativ weit in eine Stoßfängerstruktur des seitlich aufprallenden Fahrzeugs eindringen können, während der übrige Teil des Stoßfängers tief in den Insassenraum vordringen kann, so daß letztlich zwar die B-Säule einigermaßen geschützt ist, aber dennoch erhebliche Verletzungsrisiken für die Fahrzeuginsassen bestehen.

Aus der DE 198 11 215 A1 ist eine Fahrgastzelle für einen Personenkraftwagen bekannt, welche auf jeder Karosserieseite eine B-Säule aufweist. Die B-Säulen münden nach unten jeweils in einen Längsschweller. Zusätzlich liegt zur Verbesserung der Querversteifung der Fahrgastzelle ein in Querrichtung verlaufendes Versteifungselement vor. Um eine Verstärkung bei einem Seitenaufprall zu schaffen, ist ein Knotenblech vorgesehen, welches mit einem aufrechten Verstärkungsrohr verbunden ist. Das Knotenblech weist zur Aufnahme des Verstärkungsrohres oberhalb des Längsschwellers eine aufrechte, nach außen hin offene Rinne auf.

Die gattungsgemäße US 4,934,751 A zeigt eine Seitenstruktur eines Fahrzeugs mit einem Verstärkungsprofil. Das Verstärkungsprofil wird von zwei Platten gebildet, welche in Hochrichtung profiliert sind, so dass die Platten in Hochrichtung einen nicht konstanten Abstand zueinander aufweisen. Dabei wechseln sich jeweils ein Bereich mit einem größeren Abstand und ein Bereich mit einem geringeren Abstand ab.

Die Aufgabe der Erfindung besteht darin, ein Kraftfahrzeug mit einem verbesserten Seitenaufprallschutz bereitzustellen.

Diese Aufgabe wird erfindungsgemäß durch ein Kraftfahrzeug, insbesondere Coupe- oder Cabriolet-Fahrzeug gelöst, mit einer B-Säule, einer Längsschwelleranordnung, in die die B-Säule mündet, und einer Querversteifung, die sich in Querrichtung bis oberhalb der Längsschwelleranordnung und benachbart zu einem unteren Ende der B-Säule erstreckt, wobei ein in Längsrichtung und aufrecht angeordnetes, plattenförmiges Aufprallelement an einer Innenseite mit einem stirnseitigen Ende der Querversteifung verbunden ist. Das Kraftfahrzeug zeichnet sich erfindungsgemäß dadurch aus, daß das Aufprallelement als plattenförmiges Verbundteil ausgebildet ist und eine Innenhaut, eine Außenhaut und eine dazwischen angeordnete Verstärkungsstruktur aufweist.

Die Innenhaut und die Außenhaut können jeweils z.B. aus Blech ausgebildet sein.

Durch die Anordnung eines plattenförmigen Aufprallelements wird eine seitliche Stirnfläche, auf die bei einem Seitenaufprall der Stoßfänger oder die Frontpartie des aufprallenden Fahrzeugs zusammenwirkt, gegenüber einem bekannten Verstärkungsrohr ganz erheblich vergrößert, so daß in einem wesentlich größeren Maße als bisher die Möglichkeit geschaffen wird, die Aufprallenergie in einem geringstmöglichen Maße durch eine Verformung des Seitenbereichs und in einem größtmöglichen Maße durch eine Verformung des Frontbereichs des seitlich aufprallenden Fahrzeugs zu absorbieren, der hierfür weitaus besser in der Lage ist, da entsprechende Verformungswege zur Verfügung stehen, im Gegensatz zum Seitenbereich, wo bereits nach relativ geringen Verformungen bzw. Verformungswegen erhebliche Verletzungsgefahren bestehen.

Das stirnseitige Ende der Querverstärkung kann in Fahrtrichtung gesehen vor oder hinter der B-Säule angeordnet sein. Außerdem kann vorgesehen sein, daß das stirnseitige Ende der Querverstärkung die B-Säule wenigstens teilweise durchdringt oder umgekehrt.

Besonders vorteilhaft ist es, wenn das stirnseitige Ende der Querverstärkung in seitlicher Richtung über eine Außenseite der B-Säule vorsteht, so daß die Innenseite des Aufprallelementes einen Abstand von der Außenseite der B-Säule aufweist. Dadurch wird sichergestellt, daß bei einem Seitenaufprall die B-Säule nicht sogleich in Mitleidenschaft gezogen wird, sondern zunächst das Aufprallelement und der Querträger die auftretenden Belastungen so weit wie möglich in die Frontstruktur des seitlich aufprallenden Fahrzeugs einleiten.

Es kann vorteilhaft sein, wenn ein unterer Rand des Aufprallelementes mit der Längsschwelleranordnung verbunden ist. Außerdem kann ein unterer Rand des Aufprallelementes gegen eine Außenseite der Längsschwelleranordnung abgestützt anliegend angeordnet sein. Eine feste Verbindung des Aufprallelementes mit der Längsschwelleranordnung ist von Vorteil, um bei einem Aufprall im Bereich oder oberhalb der Querversteifung eine Verkippung des Aufprallelementes möglichst zu verhindern.

Es kann vorgesehen sein, daß das Aufprallelement in Längsrichtung das stirnseitige Ende der Querversteifung und die B-Säule zumindest teilweise überdeckt.

Eine besonders vorteilhafte Anordnung zeichnet sich dadurch aus, daß eine Außenfläche des Außenelements vertikal oder insbesondere über eine vertikale Position hinaus nach außen geneigt angeordnet ist, insbesondere unter einem Winkel in einem Bereich von 2° bis 20°, bevorzugt 10°, zur Vertikalen. Dies hat den Vorteil, daß ein im Vergleich zu herkömmlichen Personenkraftwagen relativ hoch angeordneter Stoßfänger von Geländewagen o.ä. (auch als SUV bezeichnet) bei einem Seitenaufprall tendenziell nach unten geführt wird und weniger leicht nach oben über das Aufprallelement hinweggleiten und in den Fahrzeuginnenraum eindringen kann.

In diesem Zusammenhang ist es auch vorteilhaft, wenn sich das Aufprallelement bis in eine relativ große Höhe erstreckt, insbesondere bis in eine Höhe von etwa 60 cm oberhalb des Bodens, da Stoßfänger oder Frontstrukturen von Geländewagen häufig bis in diese Höhe reichen.

Zur optimalen Umsetzung des erläuterten Wirkungsmechanismus des Aufprallelementes ist es vorteilhaft, wenn das Aufprallelement einen im wesentlichen horizontalen oberen Rand aufweist.

Das Aufprallelement kann stoff- und/oder formschlüssig mit der Querverstärkung und bevorzugt auch mit der Längsträgeranordnung verbunden sein.

Da nicht beabsichtigt ist, daß ein nennenswerter Anteil der Aufprallenergie in dem Aufprallelement selbst absorbiert wird, ist dieses so steif und unverformbar wie möglich zu gestalten, eventuell mit Ausnahme der Ränder, wobei es zweckmäßig sein kann, wenn das Aufprallelement als Platte aus einem massiven Material ausgebildet ist. Aus Gewichtsgründen kann Leichtmetall vorteilhaft sein.

Insbesondere kann das Aufprallelement als Wabenblech ausgebildet sein, wobei Innen- und Außenhaut aus Blech und die Verstärkungsstruktur z.B. aus zickzackförmig abgewinkeltem oder gewelltem Blech besteht.

In einer Variante kann das Aufprallelement als Wabenblech ausgebildet sein, wobei Innen- und Außenhaut aus Blech und die Verstärkungsstruktur in Form von sich in Querrichtung erstreckenden Wabenkörpern ausgebildet ist. Die Wabenkörper können bspw. runden oder sechsekkigen Querschnitt aufweisen.

Zweckmäßigerweise ist vorgesehen, daß sich die Querversteifung über die Breite des Fahrzeugs zwischen zwei B-Säulen und Längsschwelleranordnungen erstreckt und beiderseits im Sinne der Erfindung wie vorstehend erläutert mit einem Aufprallelement versehen ist.

Weitere Vorteile und Merkmale der Erfindung ergeben sich aus der nachfolgenden Beschreibung eines bevorzugten Ausführungsbeispiels der Erfindung, wobei auf eine Zeichnung
Bezug genommen ist, in der
Fig. 1 in einer schematischen Darstellung eine typische Seitenaufprallsituation zwischen zwei herkömmlichen Personenkraftwagen zeigt,
Fig. 2 eine Situation ähnlich Fig. 1 zeigt, wobei allerdings das seitlich aufprallende Fahrzug vom Typ eines Geländewagens (z.B. SUV) ist,
Fig. 3 die Aufprallsituation nach Fig. 2 anhand der beteiligten strukturellen Elemente eines erfindungsgemäßen Kraftfahrzeugs zeigt,
Fig. 4 eine schematische perspektivische Ansicht einer Kraftfahrzeugkarosserie mit einem erfindungsgemäßen Seitenaufprallschutz zeigt,
Fig. 5 einen Teilbereich aus Fig. 4 in vergrößerter Darstellung zeigt,
Fig. 6 einen Horizontalschnitt des in Fig. 5 dargestellten Teilbereichs entlang Linie VI-VI in Fig. 9 zeigt,
Fig. 7 eine horizontale Schnittansicht eines Aufprallelements nach Fig. 6 zeigt,
Fig. 8 drei Bestandteile des als Wabenblech ausgeführten Aufprallelementes nach Fig. 6 und 7 zeigt, und
Fig. 9 einen schematischen Vertikalschnitt entlang Linie IX-IX in Fig. 6 im Bereich der Querversteifung und der B-Säule zeigt.

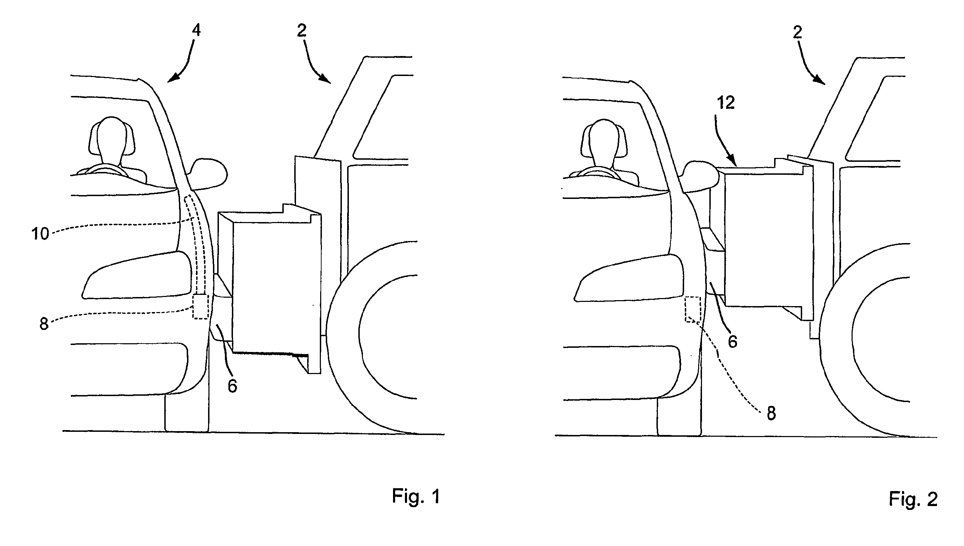

Zur Erläuterung der Problematik, auf deren Lösung die Erfindung abzielt, sei zunächst auf Fig. 1 und 2 Bezug genommen. Fig. 1 zeigt eine typische Seitenaufprallsituation, bei der ein Fahrzeug 2 unter 90° zur Fahrtrichtung eines zweiten Fahrzeugs 4 seitlich auf dieses aufprallt. Die Höhe eines Stoßfängers 6 des seitlich aufprallenden Fahrzeugs 2 befindet sich hierbei im wesentlichen in gleicher Höhe mit einer Längsschwelleranordnung 8 des zweiten Fahrzeugs 4, so daß die auftretende Aufprallenergie in den Längsträger eingeleitet wird und zu einer gezielten Verformung des Frontbereichs des seitlich aufprallenden Fahrzeugs 2 führt. Erst wenn das seitlich aufprallende Fahrzeug 2 mit seinem Frontbereich wesentlich weiter in das zweite Fahrzeug 4 eindringt oder die Struktur des Fahrzeugs 2 wesentlich verformt, kann es zu einer Verformung der B-Säule 10 des zweiten Fahrzeugs 4 ins Innere des Fahrzeugs hinein kommen, insbesondere bei einem Cabriolet-Fahrzeug, bei dem die B-Säule an ihrem oberen Ende nicht abgestützt ist oder oberhalb der Brüstungslinie in Leichtbauweise ausgeführt ist.

Fig. 2 zeigt eine andere Aufprallsituation, bei der das seitlich aufprallende Fahrzeug 2 von einem geländewagenartigen Typ (SUV, Sport Utility Vehicle) ist, bei dem der Stoßfänger 6 deutlich höher als bei einem herkömmlichen Personenkraftwagen und insbesondere höher als die Längsschwelleranordnung 8 angeordnet ist. Hinzu kommt, daß eine Oberkante 12 des Frontbereichs des seitlich aufprallenden Fahrzeugs 2 deutlich höher als bei einem herkömmlichen Personenkraftwagen liegt, nämlich etwa in Kopfhöhe eines Fahrers des zweiten Fahrzeugs 4.

Diese Gegebenheiten führen dazu, daß der Stoßfänger 6 die Tendenz hat, bereits nach einer geringen Verformung nach oben über die Längsschwelleranordnung 8 hinwegzugleiten und auf die B-Säule aufzutreffen, die daraufhin bei einem Cabriolet-Fahrzeug mangels oberer Abstützung ins Innere des Insassenraums gedrückt wird. Zudem ist ein Kopfkontakt des Fahrers bzw. Insassen mit der Oberkante 12 des Frontbereichs des seitlich aufprallenden Fahrzeugs 2 zu befürchten.

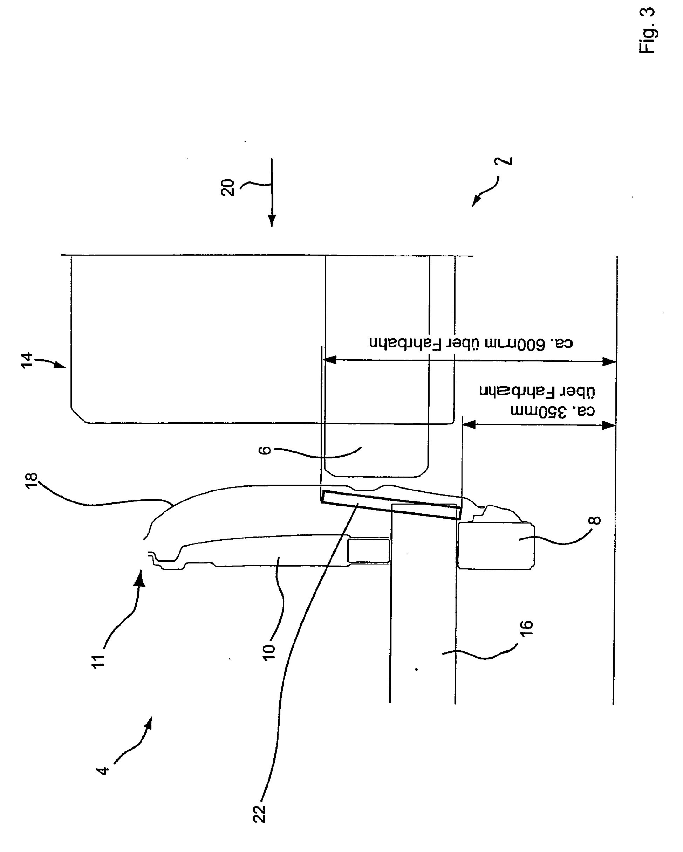

In Fig. 3 ist die Aufprallsituation nach Fig. 2 nochmals schematisch anhand einer erfindungsgemäß weiterentwickelten Fahrzeugstruktur eines Cabriolets dargestellt.

Das seitlich aufprallende Fahrzeug 2 ist lediglich mit seinem vorderen Stoßfänger 6 und seinem Frontbereich 14 dargestellt, während von dem zweiten Fahrzeug 4 lediglich die im vorliegenden Zusammenhang wesentlichen strukturellen Teile dargestellt sind, nämlich die Längsschwelleranordnung 8, die B-Säule 10 und eine Querversteifung 16. Eine seitliche Außenhaut des Fahrzeugs 4 ist mit 18 angedeutet.

Die Höhenverhältnisse sind relativ realistisch dargestellt, so daß ersichtlich ist, daß der Stoßfänger 6 bei einem seitlichen Aufprall in Pfeilrichtung 20 normalerweise die Tendenz hätte, nach einer relativ geringfügigen Verformung in seinem unteren Bereich nach oben über die Längsträgeranordnung 8 auszuweichen, sofern der Stoßfänger 6 nicht ohnehin, wie dargestellt, bereits in einer Position oberhalb der Längsschwelleranordnung 8 des zweiten Fahrzeugs 4 angebracht ist, wobei er relativ ungehindert gegen die B-Säule 10 vordringen und diese weit nach innen deformieren würde, da die B-Säule im Bereich der Brüstungslinie 11 des Fahrzeugs 2 frei endet und nicht an einem Dachrahmen abgestützt ist.

Zur Lösung dieses Problems ist erfindungsgemäß vorgesehen, daß ein plattenförmiges Aufprallelement 22 an einem seitlichen, stirnseitigen Ende der Querversteifung 16 befestigt ist, um einen seitlichen Aufprallschutz zu bilden, der bis in den Bereich des oberen Endes des Stoßfängers 6 des seitlich aufprallenden Fahrzeugs 2 reicht und so verhindert, daß dieser sogleich gegen die B-Säule 10 prallen kann.

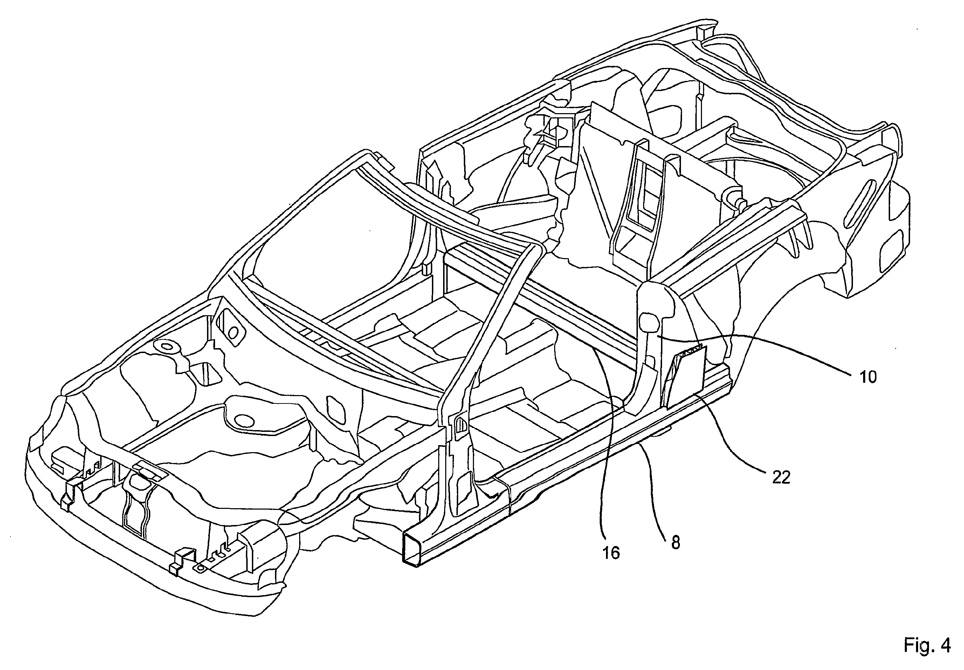

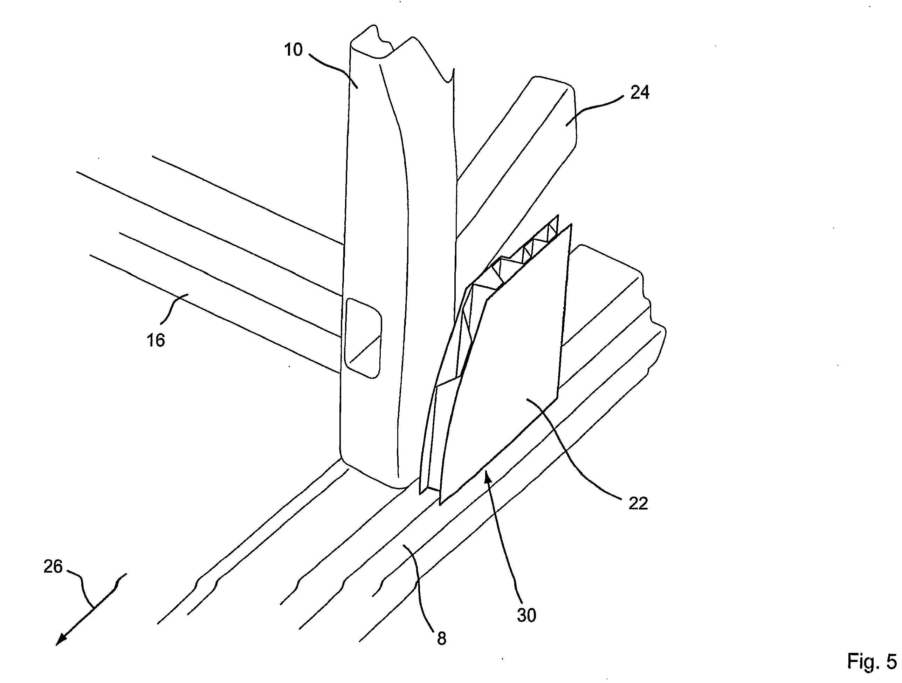

Fig. 4 zeigt in einer schematischen perspektivischen Ansicht einer Kraftfahrzeugkarosserie ein Ausführungsbeispiel für die Anordnung des Aufprallelements 22. Eine Querversteifung 16 in Form eines profilierten Querträgers erstreckt sich gerade von einer Seite des Fahrzeugs zur anderen, wobei seitliche, stirnseitige Endbereiche der Querversteifung 16 jeweils oberhalb der Längsschwelleranordnung 8 und hinter der B-Säule 10 liegen, wie aus Fig. 5 deutlicher hervorgeht, die einen vergrößerten Ausschnitt aus Fig. 4 zeigt.

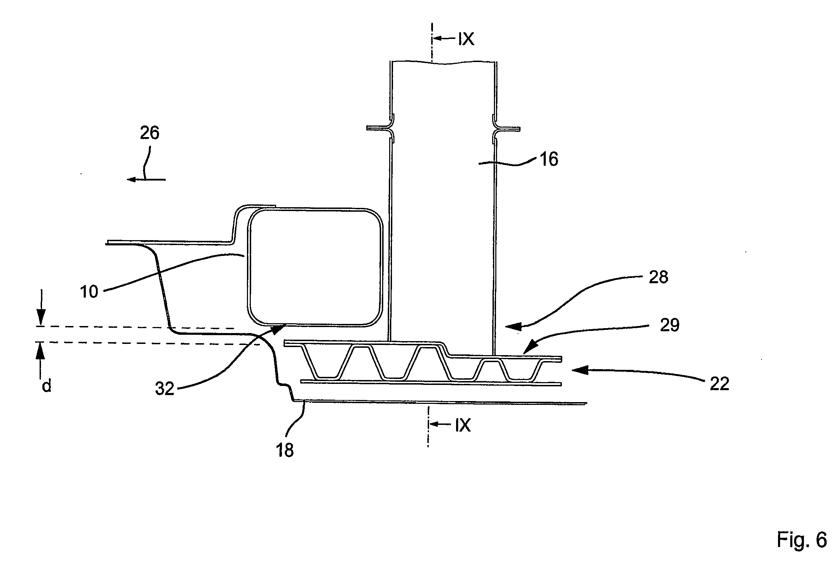

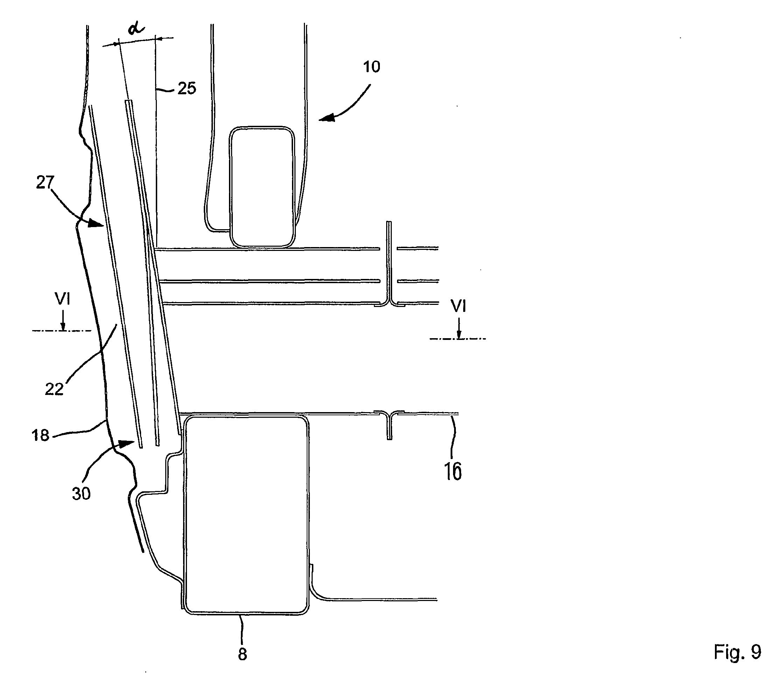

Aus Fig. 5 geht zunächst noch hervor, daß die B-Säule unter teilweiser Durchdringung der Längsschwelleranordnung 8 durch in diese eingebrachte Ausschnitte eingesetzt und damit verschweißt ist. In ähnlicher Weise ist ein Längsträger 24 in Ausschnitte der B-Säule 10 eingesetzt und mit dieser verschweißt. Die Querversteifung 16 erstreckt sich mit ihrem seitlichen stirnseitigen Endbereich 28 (s. Fig. 6, 9) in Fahrtrichtung 26 gesehen hinter der B-Säule 10 und oberhalb der Längsschwelleranordnung 8, unter dem Längsträger 24.

Wie der Horizontalschnitt nach Fig. 6 zeigt, ragt die Querversteifung 16 mit ihrem stirnseitigen Ende 28 in seitlicher Richtung bzw. Querrichtung des Fahrzeugs über eine Außenseite 32 der B-Säule 10 hinaus vor. An der Stirnseite 28 der Querversteifung 16 ist erfindungsgemäß das Aufprallelement 22 mit seiner Innenseite 29 befestigt, und zwar insbesondere durch Schweißen.

Durch diese Anordnung ist sichergestellt, daß zwischen der B-Säule 10 bzw. deren Außenseite 32 und der Innenseite 29 des Aufprallelementes 22 ein Abstand d verbleibt, der mehrere Zentimeter beträgt.

Dieser Sachverhalt läßt sich auch Fig. 9 entnehmen, aus der sich zusätzlich ergibt, daß das Aufprallelement 22, zumindest seine Außenfläche 27, gegenüber der Vertikalen 25, d.h. einer senkrecht zur horizontalen, normalen Orientierung des Fahrzeugs verlaufenden Ebene, um einen Winkel α nach außen bzw. unten geneigt angeordnet ist. Der Winkel α kann im Bereich von etwa 2° bis etwa 20° betragen und liegt in dem hier erläuterten Ausführungsbeispiel bei etwa 10°. Diese Anordnung ist aus den eingangs im Zusammenhang mit Fig. 3 erläuterten Gründen zweckmäßig, da einerseits verhindert wird, daß der Stoßfänger des seitlich aufprallenden Fahrzeugs ohne weiteres nach oben über das Aufprallelement abgleiten kann, und andererseits der Abstand d zwischen B-Säule und Aufprallelement nach oben tendenziell vergrößert wird und so eine Reserve für etwaige unvermeidliche, nach innen gerichtete Verformungen des Aufprallelementes geschaffen wird, bevor die B-Säule verformt wird.

Außerdem zeigt Fig. 9, daß das Aufprallelement 22 mit einem unteren Rand 30 seitlich gegen die Längsschwelleranordnung 8 anliegt und dadurch gegen seitliche Kräfte abgestützt ist, so daß auf das Aufprallelement einwirkende seitliche Kräfte nicht nur durch die Querversteifung 16, sondern zusätzlich durch die Längsschwelleranordnung 8 aufgenommen werden können.

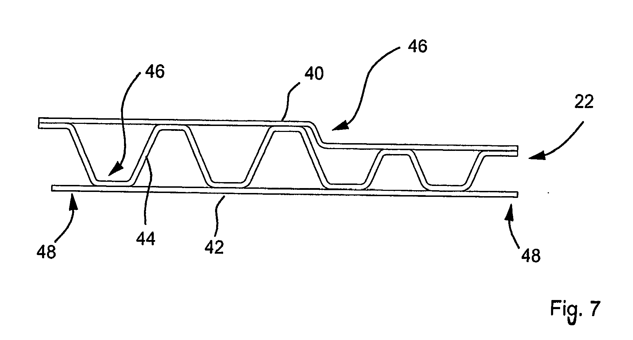

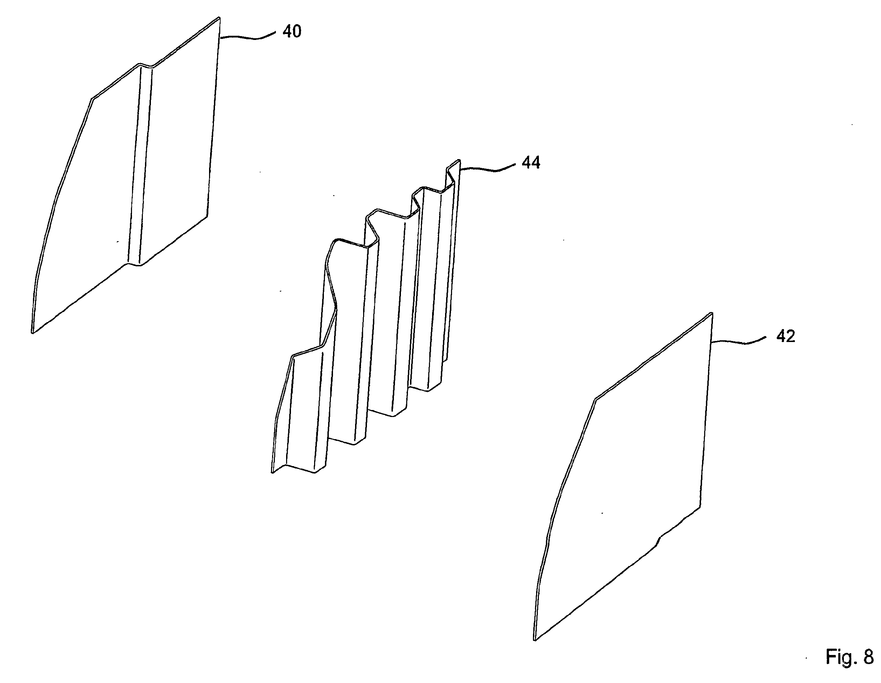

Unter Bezugnahme auf Fig. 7 und 8 wird nachfolgend eine Ausführungsform des Aufprallelements beschrieben. In der dargestellten Form weist das Aufprallelement 22 eine aus Blech bestehende Innenhaut 40, eine aus Blech bestehende Außenhaut 42 und eine diese verbindende und dazwischen angeordnete Verstärkungsstruktur 44 auf. Die Verstärkungsstruktur 44 besteht in diesem Beispiels aus einem zickzackförmig abgewinkelten Blech, wobei ebene Verbindungsbereiche 46 zur Verbindung mit Innen- und Außenhaut 40, 42 vorgesehen sind, an denen eine Verbindung mittels Punktschweißen oder Lochschweißen realisiert ist. Innen- und Außenhaut und Verstärkungsstruktur bestehen bevorzugt aus hochfestem Blech.

Die Innenhaut 40 weist eine Abkantung 46 auf, so daß das fertige Aufprallelement 22 an seiner Innenseite bereichsweise eingezogen ist, um Platz für eine hintere Seitenscheibe zu lassen.

Fig. 7 zeigt ferner, daß die Verstärkungsstruktur 44 so angeordnet ist, daß die Außenhaut 42 in ihren vorderen und hinteren Randbereichen 48 nicht abgestützt ist. Dies hat den Vorteil, daß im Falle eines Seitenaufpralls die Randbereiche 48 nach innen verformt werden, ohne daß bereits das Aufprallelement 22 als Ganzes verformt wird, was zu einer verbesserten Krafteinleitung in den Frontbereich des seitlich aufprallenden Fahrzeugs führt.

**Bezugszeichenliste**

| | | | |
|---|---|---|---|
| 2 | erstes Fahrzeug | d | Abstand |
| 4 | zweites Fahrzeug | | |
| 6 | Stoßfänger | | |
| 8 | Längsschwelleranordnung | α | Winkel |
| 10 | B-Säule | | |
| 11 | Brüstungslinie (von 2) | | |
| 12 | Oberkante (von 14) | | |
| 14 | Frontbereich (von 2) | | |
| 16 | Querversteifung (Querträger) | | |
| 18 | seitliche Außenhaut (von 4) | | |
| 20 | Pfeilrichtung (Aufprallrichtung) | | |
| 22 | Aufprallelement | | |
| 24 | Längsträger | | |
| 25 | Vertikalebene | | |
| 26 | Fahrtrichtung | | |
| 27 | Außenseite (von 22) | | |
| 28 | stirnseitiger Endabschnitt (von 16) | | |
| 29 | Innenseite (von 22) | | |
| 30 | unterer Rand (von 22) | | |
| 32 | Außenseite (von 10) | | |
| 40 | Innenhaut | | |
| 42 | Außenhaut | | |
| 44 | Verstärkungsstruktur | | |
| 46 | Abkantung | | |
| 48 | Randbereich (von 42) | | |

## Patentansprüche

1. Kraftfahrzeug (2), insbesondere Coupe- oder Cabrioletfahrzeug, mit einer B-Säule (10), einer Längsschwelleranordnung (8), in die die B-Säule (10) mündet, und einer Querversteifung (16), die sich in Querrichtung bis oberhalb der Längsschwelleranordnung (8) und benachbart zu einem unteren Ende der B-Säule (10) erstreckt, wobei ein in Längsrichtung und aufrecht angeordnetes, plattenförmiges Aufprallelement (22) an einer Innenseite (29) mit einem stirnseitigen Ende (28) der Querversteifung (16) verbunden ist, **dadurch gekennzeichnet, daß** das Aufprallelement (22) als plattenförmiges Verbundteil ausgebildet ist und eine Innenhaut (40), eine Außenhaut (42) und eine dazwischen angeordnete Verstärkungsstruktur (44) aufweist.

2. Kraftfahrzeug nach Anspruch 1, **dadurch gekennzeichnet, daß** das stirnseitige Ende (28) der Querversteifung (16) in Fahrtrichtung gesehen vor oder hinter der B-Säule (10) angeordnet ist.

3. Kraftfahrzeug nach Anspruch 1 oder 2, **dadurch gekennzeichnet, daß** das stirnseitige Ende (28) der Querversteifung (16) die B-Säule (10) wenigstens teilweise durchdringt oder umgekehrt.

4. Kraftfahrzeug nach einem der vorangehenden Ansprüche, **dadurch gekennzeichnet, daß** das stirnseitige Ende (28) der Querversteifung (16) in seitlicher Richtung über eine Außenseite (32) der B-Säule (10) vorsteht, so daß die Innenseite (29) des Aufprallelements (22) einen Abstand (d) von der Außenseite (32) der B-Säule (10) aufweist.

5. Kraftfahrzeug nach einem der vorangehenden Ansprüche, **dadurch gekennzeichnet, daß** ein unterer Rand (30) des Aufprallelements (22) mit der Längsschwelleranordnung (8) verbunden ist.

6. Kraftfahrzeug nach einem der vorangehenden Ansprüche, **dadurch gekennzeichnet, daß** ein unterer Rand (30) des Aufprallelements (22) gegen eine Außenseite der Längsschwelleranordnung (8) abgestützt anliegend angeordnet ist.

7. Kraftfahrzeug nach einem der vorangehenden Ansprüche, **dadurch gekennzeichnet, daß** das Aufprallelement (22) in Längsrichtung das stirnseitige Ende (28) der Querversteifung (16) und die B-Säule (10) zumindest teilweise überdeckt.

8. Kraftfahrzeug nach einem der vorangehenden Ansprüche, **dadurch gekennzeichnet, daß** eine Außenfläche (27) des Aufprallelements vertikal oder über eine vertikale Position hinaus nach außen geneigt angeordnet ist, insbesondere unter einem Winkel (α) in einem Bereich von 2° bis 20°, insbesondere 10°, zur Vertikalen.

9. Kraftfahrzeug nach Anspruch 8, **dadurch gekennzeichnet, daß** ein Neigungswinkel (α) des Aufprallelements (22) nach oben zu- oder abnimmt und insbesondere einer Außenhautkontur (18) des Fahrzeugs angepaßt ist.

10. Kraftfahrzeug nach einem der vorangehenden Ansprüche, **dadurch gekennzeichnet, daß** sich das Aufprallelement (22) bis in eine Höhe von etwa 60 cm oberhalb des Bodens erstreckt.

11. Kraftfahrzeug nach einem der vorangehenden Ansprüche, **dadurch gekennzeichnet, daß** das Aufprallelement einen im wesentlichen horizontalen oberen Rand aufweist.

12. Kraftfahrzeug nach einem der vorangehenden Ansprüche, **dadurch gekennzeichnet, daß** das Aufprallelement (22) stoff- und/oder formschlüssig mit der Querversteifung (16) und ggf. mit der Längsschwelleranordnung (8) verbunden ist.

13. Kraftfahrzeug nach einem der vorangehenden Ansprüche, **dadurch gekennzeichnet, daß** das Aufprallelement (22) als Platte aus einem massiven Material wie (Leicht-)Metall ausgebildet ist.

14. Kraftfahrzeug nach einem der Ansprüche 1 bis 13, **dadurch gekennzeichnet, daß** das Aufprallelement (22) als Wabenblech ausgebildet ist, wobei Innen- und Außenhaut (40, 42) aus Blech und die Versteifungsstruktur (44) aus zickzackförmig abgewinkeltem Blech bestehen.

15. Kraftfahrzeug nach einem der Ansprüche 1 bis 13, **dadurch gekennzeichnet, daß** das Aufprallelement (22) als Wabenblech ausgebildet ist, wobei Innen- und Außenhaut aus Blech und die Verstärkungsstruktur in Form von sich in Querrichtung erstreckenden Wabenkörpern ausgebildet ist.

16. Kraftfahrzeug nach einem der vorangehenden Ansprüche, **dadurch gekennzeichnet, daß** sich die Querversteifung (16) zwischen zwei B-Säulen (10) und Längsschwelleranordnungen (8) des Fahrzeugs erstreckt und beiderseits mit einem Aufprallelement gemäß einem der vorangehenden Ansprüche versehen ist.

## Claims

1. A motor vehicle (2), in particular a coupe or convertible vehicle, comprising a B pillar (10), a longitudinal sill assembly (8) in which the B pillar (10) terminates, and a transverse reinforcement (16), which extends in a transverse direction up to above the longitudinal sill assembly (8) and adjacent to a lower end of the B pillar (10), wherein a plate-shaped impact element (22), arranged in a longitudinal direction and positioned upright, is connected at an interior surface (29) to a frontal end (28) of the transverse reinforcement (16), **characterised in that** the impact element (22) is provided as a plate-shaped composite part and comprises an inner skin (40), an outer skin (42) and an interposed reinforcement structure (44).

2. The motor vehicle according to claim 1, **characterised in that** the frontal end (28) of the transverse reinforcement (16) is arranged in front of, or behind, the B pillar (10) when viewed in the direction of travel.

3. The motor vehicle according to claim 1 or 2, **characterised in that** the frontal end (28) of the transverse reinforcement (16) penetrates the B pillar (10) at least partly, or vice versa.

4. The motor vehicle according to any one of the preceding claims, **characterised in that** the frontal end (28) of the transverse reinforcement (16) protrudes laterally from an exterior surface (32) of the B pillar (10) so that the interior surface (29) of the impact element (22) is at a distance (d) from the exterior surface (32) of the B pillar (10).

5. The motor vehicle according to any one of the preceding claims, **characterised in that** a lower edge (30) of the impact element (22) is connected to the longitudinal sill assembly (8).

6. The motor vehicle according to any one of the preceding claims, **characterised in that** a lower edge (30) of the impact element (22) is arranged to be in supported contact with an exterior surface of the longitudinal sill assembly (8).

7. The motor vehicle according to any one of the preceding claims, **characterised in that** the impact element (22) at least partly covers the frontal end (28) of the transverse reinforcement (16) and the B pillar (10) in a longitudinal direction.

8. The motor vehicle according to any one of the preceding claims, **characterised in that** an exterior surface (27) of the impact element is arranged vertically or outwardly inclined beyond a vertical position, in particular at an angle (α) within a range of from 2° to 20°, in particular 10°, to vertical.

9. The motor vehicle according to claim 8, **characterised in that** an angle of inclination (α) of the impact element (22) increases or decreases in an upward direction and is, in particular, adapted to an outer skin contour (18) of the vehicle.

10. The motor vehicle according to any one of the preceding claims, **characterised in that** the impact element (22) extends up to a height of approximately 60 cm above the ground.

11. The motor vehicle according to any one of the preceding claims, **characterised in that** the impact element has a substantially horizontal upper edge.

12. The motor vehicle according to any one of the preceding claims, **characterised in that** the impact element (22) is connected to the transverse reinforcement (16) and, as the case may be, to the longitudinal sill assembly (8) by bonding or in a form-fitting manner.

13. The motor vehicle according to any one of the preceding claims, **characterised in that** the impact element (22) is provided as a plate made of a massive material, such as (light) metal.

14. The motor vehicle according to any one of claims 1 to 13, **characterised in that** the impact element (22) is provided as a honeycomb metal sheet, with the inner and outer skins (40, 42) consisting of sheet metal and the reinforcement structure (44) consisting of zigzag-bent sheet metal.

15. The motor vehicle according to any one of claims 1 to 13, **characterised in that** the impact element (22) is provided as a honeycomb metal sheet, with the inner and outer skins consisting of sheet metal and the reinforcement structure being provided in the form of transversely extending honeycomb bodies.

16. The motor vehicle according to any one of the preceding claims, **characterised in that** the transverse reinforcement (16) extends between two B pillars (10) and longitudinal sill assemblies (8) of the vehicle and is provided on both sides with an impact element according to any one of the preceding claims.

## Revendications

1. Véhicule automobile (2), notamment un coupé ou un cabriolet, comprenant un montant B (10), un ensemble de seuil longitudinal (8) dans lequel aboutit le montant B (10), et un renforcement transversal (16) qui s'étend en direction transversale jusqu'au-dessus de l'ensemble de seuil longitudinal (8) et adjacent à une extrémité inférieure du montant B (10), dans lequel véhicule automobile un élément de choc (22) en forme de plaque, disposé en direction longitudinale et debout, est relié, sur une face intérieure (29), avec une extrémité frontale (28) du renforcement transversal (16), **caractérisé en ce que** l'élément de choc (22) est réalisé sous forme d'une pièce composite en forme de plaque et comprend une peau intérieure (40), une peau extérieure (42) et une structure de renforcement (44) interposée.

2. Véhicule automobile selon la revendication 1, **caractérisé en ce que** l'extrémité frontale (28) du renforcement transversal (16) est disposée devant ou derrière le montant B (10), vue en direction de marche.

3. Véhicule automobile selon la revendication 1 ou 2, **caractérisé en ce que** l'extrémité frontale (28) du renforcement transversal (16) pénètre le montant B (10) au moins partiellement, ou inversement.

4. Véhicule automobile selon l'une quelconque des revendications précédentes, **caractérisé en ce que** l'extrémité frontale (28) du renforcement transversal (16) fait saillie latéralement d'une face extérieure (32) du montant B (10) de sorte que la face intérieure (29) de l'élément de choc (22) présente une distance (d) de la face extérieure (32) du montant B (10).

5. Véhicule automobile selon l'une quelconque des revendications précédentes, **caractérisé en ce qu'**un bord inférieur (30) de l'élément de choc (22) est relié à l'ensemble de seuil longitudinal (8).

6. Véhicule automobile selon l'une quelconque des revendications précédentes, **caractérisé en ce qu'**un bord inférieur (30) de l'élément de choc (22) est disposé en contact supporté avec une face extérieure de l'ensemble de seuil longitudinal (8).

7. Véhicule automobile selon l'une quelconque des revendications précédentes, **caractérisé en ce que** l'élément de choc (22) recouvre, au moins partiellement, l'extrémité frontale (28) du renforcement transversal (16) et le montant B (10) en direction longitudinale.

8. Véhicule automobile selon l'une quelconque des revendications précédentes, **caractérisé en ce qu'**une face extérieure (27) de l'élément de choc est disposée verticalement ou inclinée vers l'extérieur au-delà d'une position verticale, notamment sous un angle (α) de 2° à 20°, notamment 10°, par rapport à la verticale.

9. Véhicule automobile selon la revendication 8, **caractérisé en ce qu'**un angle d'inclinaison (α) de l'élément de choc (22) augmente ou diminue vers le haut et est notamment adapté à un contour de peau extérieure (18) du véhicule.

10. Véhicule automobile selon l'une quelconque des revendications précédentes, **caractérisé en ce que** l'élément de choc (22) s'étend jusqu'à environ 60 cm du sol.

11. Véhicule automobile selon l'une quelconque des revendications précédentes, **caractérisé en ce que** l'élément de choc présente un bord supérieur sensiblement horizontal.

12. Véhicule automobile selon l'une quelconque des revendications précédentes, **caractérisé en ce que** l'élément de choc (22) est relié avec le renforcement transversal (16) et éventuellement avec l'ensemble de seuil longitudinal (8) par liaison de matière à matière ou par complémentarité de forme.

13. Véhicule automobile selon l'une quelconque des revendications précédentes, **caractérisé en ce que** l'élément de choc (22) est réalisé sous forme d'une plaque en matériau massif tel que du métal (léger).

14. Véhicule automobile selon l'une quelconque des revendications 1 à 13, **caractérisé en ce que** l'élément de choc (22) est réalisé sous forme d'une tôle en nid d'abeilles, les peaux intérieure et extérieure (40, 42) étant réalisées en tôle et la structure de renforcement (44) étant réalisée à partir d'une tôle coudée en zigzag.

15. Véhicule automobile selon l'une quelconque des revendications 1 à 13, **caractérisé en ce que** l'élément de choc (22) est réalisé sous forme d'une tôle en nid d'abeilles, les peaux intérieure et extérieure étant réalisées en tôle et la structure de renforcement étant réalisée sous forme de structures en nid d'abeilles s'étendant en direction transversale.

16. Véhicule automobile selon l'une quelconque des revendications précédentes, **caractérisé en ce que** le renforcement transversal (16) s'étend entre deux montants B (10) et des ensembles de seuil longitudinal (8) du véhicule et est présente des deux côtés un élément de choc selon l'une quelconque des revendications précédentes.
